# EUROPEAN PATENT APPLICATION

(11) **EP 2 196 744 A2**
(43) Date of publication of application: **16.06.2010**
(21) Application number: 09175618.9
(22) Date of filing: 11.11.2009
(51) Int. Cl.: F24J 2/38, H01L 31/052, G05D 3/10, H01L 31/058

(54) **Photovoltaic power generation system**

(30) Priority: 09.12.2008 KR 20080124437
(71) Applicant: SAMSUNG ELECTRONICS CO., LTD., Suwon-si, Gyeonggi-do (KR)
(72) Inventor: Oh, Jae Hyuk, Gyeonggi-do (KR); Han, Seong Joo, Gyeonggi-do (KR); Wu, Seong Je, Gyeonggi-do (KR); Choi, See Young, Gyeonggi-do (KR)
(74) Representative: Grünecker, Kinkeldey, Stockmair & Schwanhäusser Anwaltssozietät

(57) **Abstract**

A photovoltaic power generation system including a solar cell module having a plurality of layers and a sun tracking device to change an incident angle of solar energy upon the solar cell module. The sun tracking device is mounted at one of the layers such that the sun tracking device is combined with the solar cell module into a module.

## Description

### BACKGROUND

### 1. Field

Embodiments of the present invention relate to a photovoltaic power generation system that easily tracks the position of the sun.

### 2. Description of the Related Art

A photovoltaic power generation system may use a semitransparent solar light collection type solar cell to replace a window or a general opaque solar cell to be installed at a roof or a wall.

The semitransparent solar light collection type solar cell is beautiful in appearance but has very low power generation efficiency due to a small amount of solar radiation caused by low efficiency and restriction of its installation position. The general opaque solar cell (silicon-based solar cell) has a relatively high efficiency, but power generation efficiency of the general opaque solar cell is still too low to satisfy economic requirements for popularization.

Research and development are in progress in four aspects to improve the low power generation efficiency of the solar cell. The first is to develop a solar cell having high efficiency and low manufacturing costs, thereby improving power generation efficiency. The second is to ensure that a solar cell always faces the sun using a sun tracking system, thereby increasing the amount of energy incident upon the solar cell and thus increasing the amount of power generated. The third is to provide a light collection type solar cell system to collect light to high-efficiency solar cells using a lens or mirror to generate power. This may use the fewest number of expensive but high-efficiency solar cells to improve economy. The last is to recover heat generated from the surroundings of a solar cell, during generation of power using solar energy incident upon the solar cell, to utilize the heat for air cooling and heating and the supply of hot water, thereby improving total energy production efficiency of the photovoltaic power generation system.

### SUMMARY

Therefore, it is an aspect of the present invention to provide a photovoltaic power generation system where a sun tracking device is simplified such that the photovoltaic power generation system is easily installed at a building.

Additional aspects of the invention will be set forth in part in the description which follows and, in part, will be apparent from the description, or may be learned by practice of the invention.

In accordance with one aspect, a photovoltaic power generation system includes a solar cell module having a plurality of layers and a sun tracking device to change an incident angle of solar energy upon the solar cell module. The sun tracking device may be mounted at one of the layers such that the sun tracking device is combined with the solar cell module into a module.

One of the layers may include a light receiver to allow the solar energy to be incident thereupon, and the sun tracking device controls the light receiver.

The light receiver may be formed of a flexible material.

The light receiver may include an optical fiber.

The layers may include a condenser to condense the solar energy received by the light receiver on a spot, a solar cell to convert the solar energy into electric energy, and a heat recovery part to recover heat generated when cooling the solar cell.

The sun tracking device may include a push member to push the light receiver, a first guide member to guide the push member, a second guide member to guide the first guide member, a first drive unit to drive the push member, and a second drive unit to drive the first guide member.

The push member may be slid on the first guide member in a first direction, and the first guide member may be slid on the second guide member in a second direction perpendicular to the first direction.

Each of the first and second drive units may include a drive motor and a power transmission member.

The power transmission member may include a rack gear and a pinion gear.

The power transmission member may include a wire.

An amount of solar energy incident upon the light receiver may be sensed, and the first drive unit and the second drive unit may be driven based on the sensed amount of the solar energy.

In accordance with another aspect, a photovoltaic power generation system includes a solar cell module having a light receiver and a sun tracking device to control the light receiver.

The light receiver may be bent to track a position of the sun.

The solar cell module may include a holder to fix a lower part of the light receiver, and the sun tracking device may include a push member to push an upper part of the light receiver.

The sun tracking device may include a first guide member to guide the push member in a first direction, a second guide member to guide the first guide member in a second direction perpendicular to the first direction, a first drive unit to drive the push member, and a second drive unit to drive the first guide member.

### BRIEF DESCRIPTION OF THE DRAWINGS

These and/or other aspects of the invention will become apparent and more readily appreciated from the following description of the embodiments, taken in conjunction with the accompanying drawings of which:
FIG. 1 is a typical view illustrating a photovoltaic power generation system according to an embodiment;
FIG. 2 is an exploded perspective view illustrating a sun tracking device according to an embodiment;
FIGS. 3A to 4B are views illustrating the operation of the sun tracking device of FIG. 2;
FIG. 5 is an exploded perspective view illustrating a sun tracking device according to another embodiment; and
FIG. 6 is an exploded perspective view illustrating a sun tracking device according to a further embodiment.

### DETAILED DESCRIPTION OF EMBODIMENTS

Reference will now be made in detail to the embodiments of the present invention, examples of which are illustrated in the accompanying drawings, wherein like reference numerals refer to the like elements throughout.

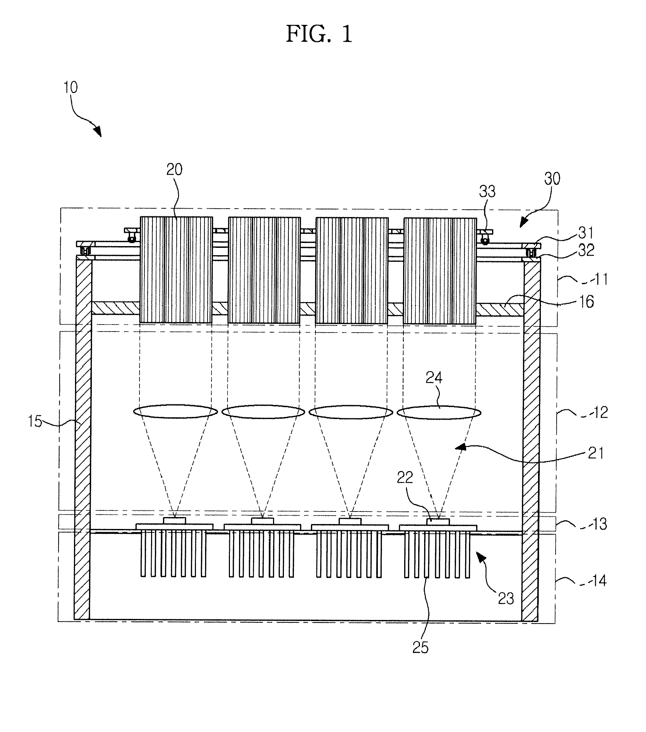

FIG. 1 is a typical view illustrating a photovoltaic power generation system according to an embodiment.

As shown in FIG. 1, the photovoltaic power generation system includes a solar cell module 10 and a sun tracking device 30.

The solar cell module 10 converts solar energy into electric energy. The solar cell module 10 includes a case 15. The case 15 may be divided into first to fourth layers 11 to 14.

The first layer 11 includes a light receiver 20 upon which solar energy is incident. The second layer 12 includes a condenser 21 to condense the solar energy transmitted by the light receiver 20 to a spot. The third layer 13 includes a solar cell 22 to convert the solar energy condensed by the condenser 21 into electric energy. The fourth layer 14 includes a heat recovery part 23 to cool the solar cell 22.

Also, the first layer 11 may further include a sun tracking device 30 to move the light receiver 20 to track the position of the sun. The sun tracking device 30 and the solar cell module 10 may be combined into a module.

The light receiver 20 receives solar energy emitted from the sun. The light receiver 20 is formed in the shape of a flat sheet having a large area to receive the solar energy. The light receiver 20 is disposed at the uppermost part of the solar cell module 10 to receive the solar energy.

The light receiver 20 is formed of a flexible material that transmits solar energy and is bendable. The light receiver 20 may be formed of an optical fiber. Also, the light receiver 20 may be formed of a bundle of optical fibers. Consequently, the sun tracking device 30 may push the light receiver 20 depending upon the position of the sun such that the light receiver 20 is bent. Upon bending the light receiver 20, an incident angle of the solar energy changes. The sun tracking device 30 pushing the light receiver 20 will be described in detail later.

The condenser 21 condenses dispersed solar energy onto a spot. That is, the solar energy transmitted from the flat sheet type light receiver 20 is condensed onto a spot using a lens 24. A Fresnel lens may be used as the lens 24. A high-power lens may be used to condense the solar energy with high power.

The solar cell 22 is mounted at the spot where the solar energy is condensed. The solar cell 22 corresponds to a photovoltaic power generation unit to convert solar energy into electric energy.

The solar cell 22 may exhibit high efficiency. When the solar energy is condensed with high power using the high-power lens 24, as previously described, a small-sized solar cell 22 may be used, which simultaneously satisfies economy and efficiency.

During the conversion of the solar energy to the electric energy, the temperature of the solar cell 22 rises. If the solar cell 22 overheats, power generation efficiency is decreased. For this reason, the heat recovery part 23 is generally provided to cool the solar cell 22. In particular, for a condensing type solar cell module, the rise in temperature of the solar cell 22 due to the condensation of the solar energy is further accelerated, and therefore, the cooling performance of the heat recovery part 23 is more important.

The heat recovery part 23 includes a heat sink 25. When heat generated during the cooling of the solar cell 22 using the heat sink 25 is recovered and utilized for the supply of hot water or air cooling and heating, total energy generation efficiency of the photovoltaic power generation system may be improved.

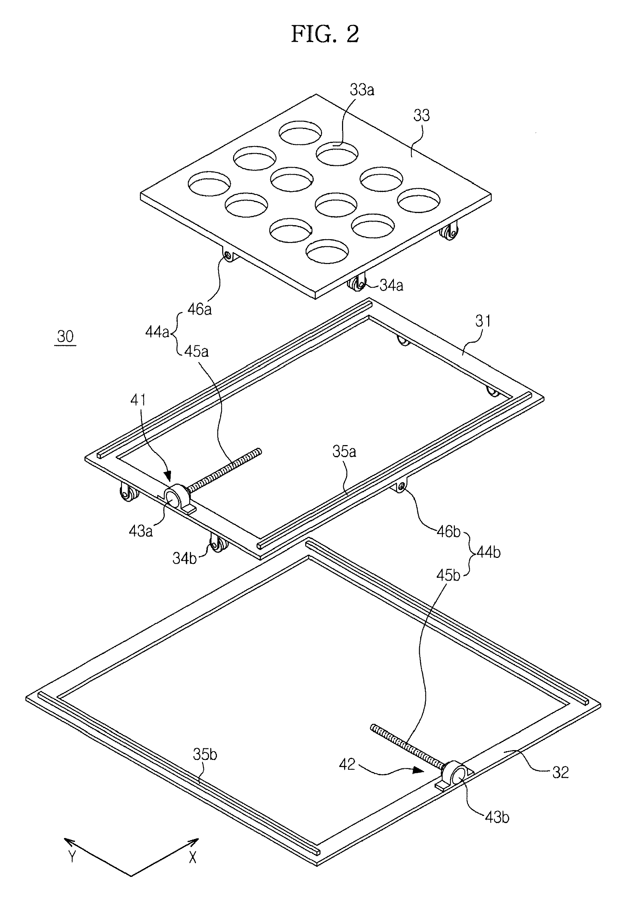

FIG. 2 is an exploded perspective view illustrating a sun tracking device 30 according to an embodiment of the present invention.

As shown in FIGS. 1 and 2, the sun tracking device 30 is combined with the solar cell module 10 into a module. That is, the sun tracking device 30 is mounted at the first layer 11 of the solar cell module 10. Consequently, the photovoltaic power generation system may be miniaturized and easy to handle to such an extent that the photovoltaic power generation system may be installed at a building.

The sun tracking device 30 tracks the position of the sun such that a large amount of solar energy is incident upon the solar cell module 10. The entirety of the solar cell module 10 does not track the sun, but only the light receiver 20 of the solar cell module 10 tracks the sun, by the provision of the sun tracking device 30. As shown in FIG. 1, the lower part of the light receiver 20 is fixed by a holder 16, and the upper part of the light receiver 20 is inserted through the sun tracking device 30. Upon driving the sun tracking device 30, therefore, the upper part of the light receiver 20 is pushed by the sun tracking device 30, with the result that the light receiver 20 is bent to track the position of the sun.

The sun tracking device 30 includes a push member 33 to push the light receiver 20, a first guide member 31 to guide the push member 33, a second guide member 32 to guide the first guide member 31, a first drive unit 41 to drive the push member 33, and a second drive unit 42 to drive the first guide member 31.

The push member 33 pushes the light receiver 20 such that the light receiver 20 is bent. The push member 33 has an insertion hole 33a through which the light receiver 20 is simply inserted. Consequently, friction between the insertion hole 33a and the light receiver 20 is low, and therefore, the light receiver 20 may be easily bent. With the movement of the push member 33 in an X-axis direction or in a Y-axis direction, the light receiver 20 is bent in the X-axis direction or in the Y-axis direction. Consequently, an incident plane of the light receiver 20 faces the sun such that a large amount of solar energy is incident upon the light receiver 20.

The push member 33 is slid from the first guide member 31 in the X-axis direction (or in a first direction) by the first drive unit 41.

The push member 33 is mounted at the first guide member 31 to reciprocate in the X-axis direction. Rollers 34a of the push member 33 slide along corresponding rails 35a of the first guide member 31. Various sliding structures may be applied between the push member 33 and the first guide member 31.

A driving force is transmitted to the push member 33 by the first drive unit 41. The first drive unit 41 includes a first drive motor 43a and a first power transmission member 44a. The first power transmission member 44a includes a first threaded rod 45a to be rotated by the first drive motor 43a and a first threaded hole 46a, formed at the push member 33, through which the first threaded rod 45a is threadedly inserted. Consequently, when the first threaded rod 45a is rotated by the first drive motor 43a in the forward direction or in the reverse direction, the push member 33, having the first threaded hole 46a through which the first threaded rod 45a is threadedly inserted, advances or retreats in the X-axis direction.

The first guide member 31 is slid from the second guide member 32 in the Y-axis direction by the second drive unit 42. At this time, the push member 33 slides in the Y-axis direction because the push member 33 is mounted at the first guide member 31.

The first guide member 31 is mounted at the second guide member 32 to reciprocate in the Y axis direction (or in a second direction). Rollers 34b of the first guide member 31 slide along corresponding rails 35b of the second guide member 32. Various sliding structures may be applied between the first guide member 31 and the second guide member 32.

A driving force is transmitted to the first guide member 31 by the second drive unit 42. The second drive unit 42 includes a second drive motor 43b and a second power transmission member 44b. The second power transmission member 44b includes a second threaded rod 45b to be rotated by the second drive motor 43b and a second threaded hole 46b, formed at the first guide member 31, through which the second threaded rod 45b is threadedly inserted. Consequently, when the second threaded rod 45b is rotated by the second drive motor 43b in the forward direction or in the reverse direction, the first guide member 31, having the second threaded hole 46b through which the second threaded rod 45b is threadedly inserted, advances or retreats in the Y-axis direction.

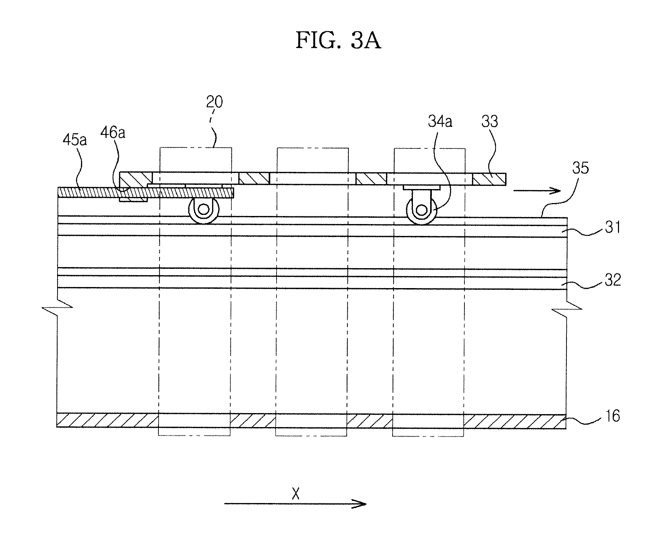

FIGS. 3A to 4B are views illustrating the operation of the sun tracking device of FIG. 2.

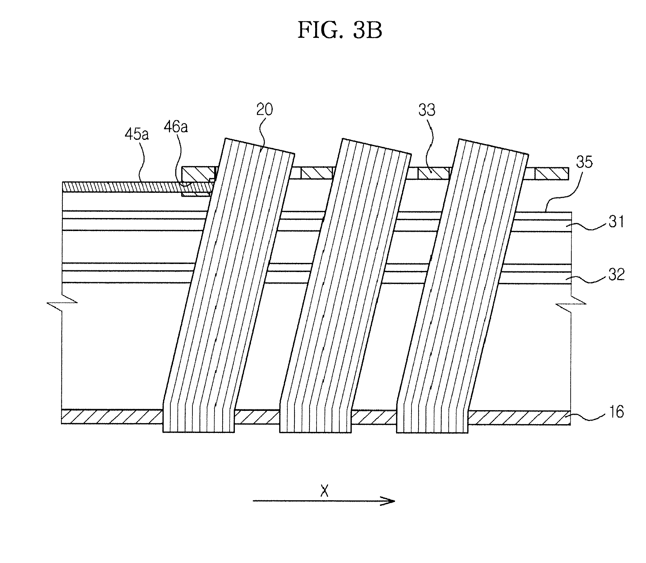

FIGS. 3A and 3B illustrate that the push member 33 is moved on the first guide member 31 in the X-axis direction. Referring to FIG. 2 and FIGS. 3A and 3B, when the first drive unit 41 is driven, the push member 33 is moved to the right by the relative movement between the first threaded rod 45a and the first threaded hole 46a. At this time, the push member 33 pushes the upper part of the light receiver 20 from the left side of the light receiver 20. Because the lower part of the light receiver 20 is fixed, the light receiver 20 may be bent in the X-axis direction.

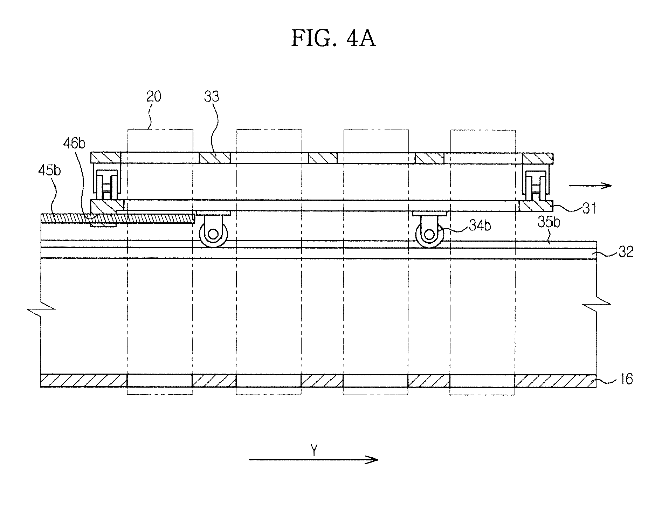

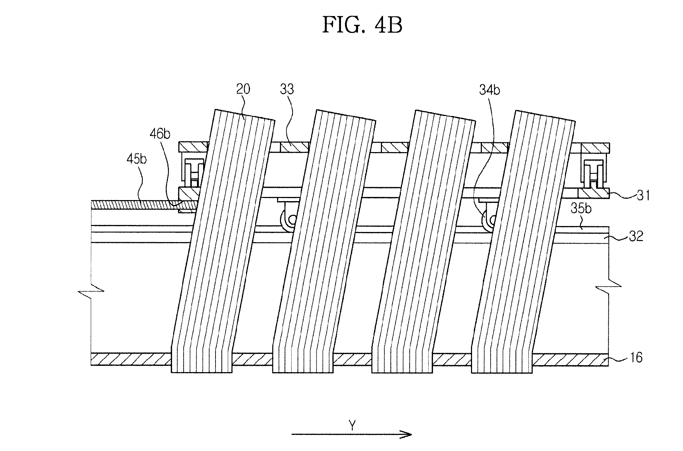

FIGS. 4A and 4B illustrate that the first guide member 31 is moved on the second guide member 32 in the Y-axis direction. Referring to FIG. 2 and FIGS. 4A and 4B, when the second drive unit 42 is driven, the first guide member 31 is moved to the right by the relative movement between the second threaded rod 45b and the second threaded hole 46b. At this time, the push member 33 is also moved to the right because the push member 33 is mounted at the first guide member 31. Consequently, the push member 33 pushes the upper part of the light receiver 20 from the left side of the light receiver 20. Because the lower part of the light receiver 20 is fixed, the light receiver 20 may be bent in the Y-axis direction.

In conclusion, the push member is moved in the X-axis direction, and, at the same time, is moved in the Y-axis direction by the first guide member 31, with the result that the light receiver 20 is bent in the X-axis direction and in the Y-axis direction. Consequently, the light receiver 20 may secure a larger amount of incident solar energy through the tracking of the position of the sun.

Meanwhile, the sun tracking device 30 may further include a plurality of sensors to sense the amount of solar energy incident upon the light receiver 20. The sun tracking device 30 may control the light receiver 20 such that the light receiver 20 secures much the same amount of solar energy as that sensed by the sensors. Also, the sun tracking device 30 may drive the first drive unit 41 and the second drive unit 42 based on the amount of current generated by the solar cell 22 to control the light receiver 20 to track the position of the sun.

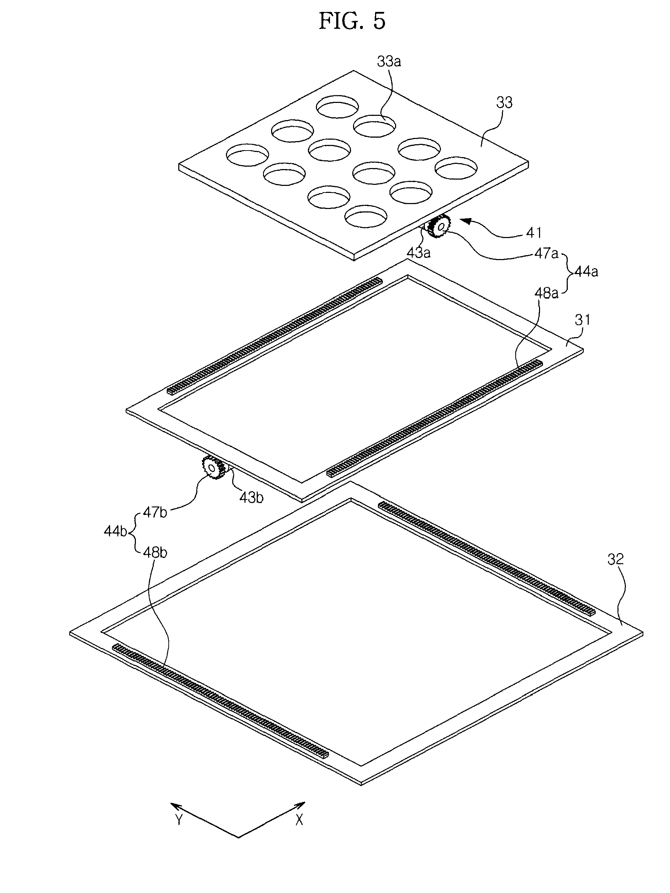

FIG. 5 is an exploded perspective view illustrating a sun tracking device according to another embodiment.

As shown in FIG. 5, the sun tracking device includes a push member 33, a first guide member 31, and a second guide member 32.

The push member 33 is mounted at the first guide member 31 to move in the X-axis direction. A first drive unit 41 includes a first drive motor 43a and a first power transmission member 44a. The first power transmission member 44a includes first pinion gears 47a mounted at the push member 33 and first rack gears 48a mounted at the first guide member 31. Consequently, when the first drive motor 43a is driven, the push member 33 is moved in the X-axis direction by the relative movement between the first pinion gears 47a and the first rack gears 48a.

The first guide member 31 is mounted at the second guide member 32 to move in the Y-axis direction. A second drive unit 42 includes a second drive motor 43b and a second power transmission member 44b. The second power transmission member 44b includes second pinion gears 47b mounted at the first guide member 31 and second rack gears 48b mounted at the second guide member 32. Consequently, when the second drive motor 43b is driven, the first guide member 31 is moved in the Y-axis direction by the relative movement between the second pinion gears 47b and the second rack gears 48b. At this time, the push member 33 is also moved in the Y-axis direction by the first guide member 31.

A light receiver 20 is bent with the movement of the push member 33 in the X-axis direction and in the Y-axis direction, in the same manner as described with reference to FIGS. 3A to 4B.

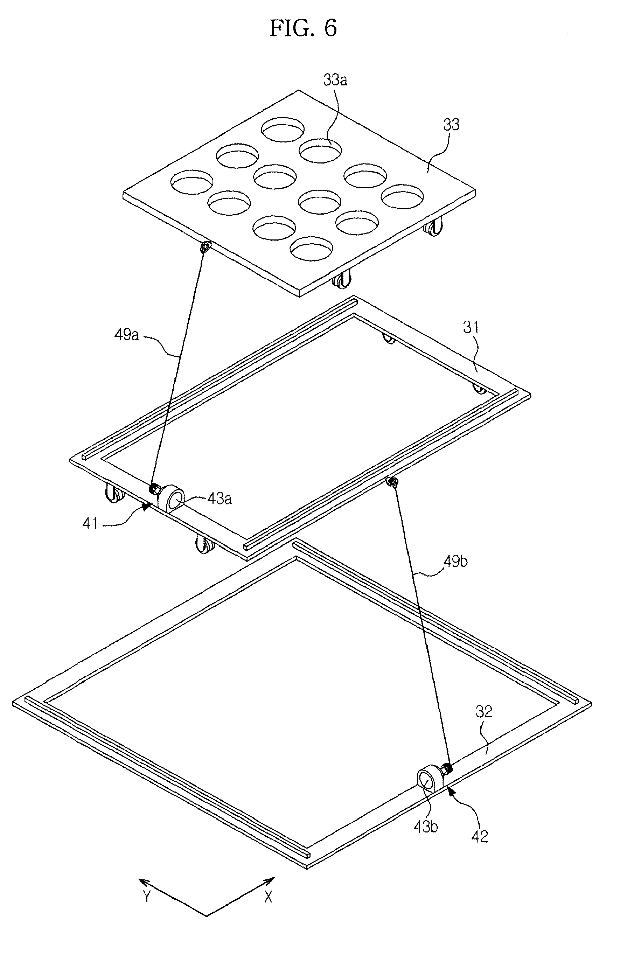

FIG. 6 is an exploded perspective view illustrating a sun tracking device according to a further embodiment.

As shown in FIG. 6, the sun tracking device includes a push member 33, a first guide member 31, and a second guide member 32.

The push member 33 is mounted at the first guide member 31 to move in the X-axis direction. A first drive unit 41 includes a first drive motor 43a and a first power transmission member 44a. The first power transmission member 44a includes a first wire 49a to interconnect the push member 33 and the first drive motor 43a. Consequently, when the first drive motor 43a is driven, the first wire 49a is wound or unwound to move the push member 33 in the X-axis direction. The first wire 49a may be wound on a pulley.

The first guide member 31 is mounted at the second guide member 32 to move in the Y-axis direction. A second drive unit 42 includes a second drive motor 43b and a second power transmission member 44b. The second power transmission member 44b includes a second wire 49b to interconnect the first guide member 31 and the second drive motor 43b. When the second drive motor 43b is driven, the second wire 49b is wound or unwound to move the first guide member 31 in the Y-axis direction. At this time, the push member 33 is also moved in the Y-axis direction by the first guide member 31. The second wire 49b may be wound on a pulley.

A light receiver 20 is bent with the movement of the push member 33 in the X-axis direction and in the Y-axis direction, in the same manner as described with reference to FIGS. 3A to 4B.

As is apparent from the above description, the photovoltaic power generation system according to the embodiment of the present invention may be easily installed at a building through the combination of the sun tracking device and the solar cell module into a module.

Also, the structure of the sun tracking device may be simplified using an optical fiber, thereby improving economy of the photovoltaic power generation system.

Although a few embodiments of the present invention have been shown and described, it would be appreciated by those skilled in the art that changes may be made in these embodiments without departing from the principles and spirit of the invention, the scope of which is defined in the claims and their equivalents.

## Claims

1. A photovoltaic power generation system comprising:
a solar cell module having a plurality of layers; and
a sun tracking device to change an incident angle of solar energy upon the solar cell module, wherein
the sun tracking device is mounted at one of the layers such that the sun tracking device is combined with the solar cell module into a module.

2. The photovoltaic power generation system according to claim 1, wherein one of the layers comprises a light receiver to allow the solar energy to be incident thereupon, and the sun tracking device controls the light receiver.

3. The photovoltaic power generation system according to claim 2, wherein the light receiver is formed of a flexible material.

4. The photovoltaic power generation system according to claim 2, wherein the light receiver comprises an optical fiber.

5. The photovoltaic power generation system according to claim 2, wherein the layers comprise a condenser to condense the solar energy received by the light receiver on a spot, a solar cell to convert the solar energy into electric energy, and a heat recovery part to recover heat generated when cooling the solar cell.

6. The photovoltaic power generation system according to claim 2, wherein the sun tracking device comprises a push member to push the light receiver, a first guide member to guide the push member, a second guide member to guide the first guide member, a first drive unit to drive the push member, and a second drive unit to drive the first guide member.

7. The photovoltaic power generation system according to claim 6, wherein the push member is slid on the first guide member in a first direction, and the first guide member is slid on the second guide member in a second direction perpendicular to the first direction.

8. The photovoltaic power generation system according to claim 6, wherein each of the first and second drive units comprises a drive motor and a power transmission member.

9. The photovoltaic power generation system according to claim 8, wherein the power transmission member comprises a rack gear and a pinion gear.

10. The photovoltaic power generation system according to claim 8, wherein the power transmission member comprises a wire.

11. The photovoltaic power generation system according to claim 6, wherein an amount of solar energy incident upon the light receiver is sensed, and the first drive unit and the second drive unit are driven based on the sensed amount of the solar energy.

12. The photovoltaic power generation system according to claim 2, wherein the light receiver is bent to track a position of the sun.

13. The photovoltaic power generation system according to claim 2, wherein the solar cell module comprises a holder to fix a lower part of the light receiver, and the sun tracking device comprises a push member to push an upper part of the light receiver.

14. The photovoltaic power generation system according to claim 13, wherein the sun tracking device comprises a first guide member to guide the push member in a first direction, a second guide member to guide the first guide member in a second direction perpendicular to the first direction, a first drive unit to drive the push member, and a second drive unit to drive the first guide member.
